# EUROPEAN PATENT APPLICATION

(11) **EP 0 779 339 A2**
(43) Date of publication of application: **18.06.1997**
(21) Application number: 96308765.5
(22) Date of filing: 04.12.1996
(51) Int. Cl.: C08L 71/12, C08L 51/04

(54) **Thermoplastic resin composition for automotive parts**

(30) Priority: 12.12.1995 JP 346511/95
(71) Applicant: GENERAL ELECTRIC COMPANY, Schenectady, NY 12345 (US)
(72) Inventor: Kosaka, Kazunari, Moka-shi, Tochigi Prefecture (JP); Morokuma, Hiroshi, Moka City, 321-43, Tochigi Prefecture (JP); Morita, Hisao, Takaishi City, Osaka Prefecture (JP); Masato, Takaku, Takaishi City, Osaka Prefecure (JP)
(74) Representative: Szary, Anne Catherine, Dr.

(57) **Abstract**

Thermoplastic resin compositions are provided which have excellent chemical resistance and impact resistance, do not peel in sheets, and are especially well suited to use in automotive parts. In preferred embodiments, the thermoplastic resin compositions comprise 20-80% by weight of poly(phenylene ether) resin and 80-20 percent by weight of a specific styrenic resin.

## Description

### Field of the Invention

The present invention concerns a thermoplastic resin composition for automotive parts containing poly(phenylene ether) resin and a specific styrenic resin. In particular, it concerns a thermoplastic resin composition for automotive parts which is suitable for manufacturing various types of automotive parts and has excellent chemical resistance, excellent impact resistance, and improved moldability in that it does not peel in sheets when molded.

### Brief Description of the Related Art

Poly(phenylene ether), which is known to be a thermoplastic resin with excellent mechanical properties, thermal resistance, electrical properties, dimensional stability, and the like, is widely used in automotive, electrical, and electronic parts.

Poly(phenylene ether) resin is often used in automotive parts, especially when high thermal resistance and impact resistance are required. However, although this resin composition has the advantages mentioned hereinabove, it also has drawbacks such as poor moldability. A conventional approach to improving moldability is the use of styrenic resin blends. Although blends of poly(phenylene ether) and styrenic resins have diminished thermal resistance, they show marked improvements in moldability, permitting the desired molded articles to be obtained easily.

Many automotive parts, in particular, tend to be large, and resin compositions with moldability improved by this method are widely used for them. However, because of the environment in which automotive parts are used, oil, wax, certain organic solvents, and the like often build up on them, adding chemical resistance to the list of required properties.

Moldability can be improved by blending styrenic resin or rubber-modified styrenic resin into such compositions, and rubber-modified styrenic resin is often used anyway because it is useful for imparting impact resistance. Such rubber-modified styrenic resin contains graft-polymerized rubber-modified styrenic resin, with the commonly used rubber component and styrenic resin being polybutadiene and styrene, respectively.

Although impact resistance improves with the rubber content, moldability diminishes. By contrast, decreasing the rubber content does not degrade moldability, but it does not improve impact resistance that much. Many patent applications have been filed on such compositions, all of which use rubber-modified styrene resin in which the practical range of the rubber content is 4-12 percent.

When the impact resistance of such compositions is insufficient, the conventional remedy is to add styrene-butadiene copolymers having a diblock or triblock structure or other elastomers to the composition later. Such techniques are actually used in the prior art.

However, although such measures improve impact resistance, they do not provide a satisfactory remedy because they allow sheet-like peeling to occur in molded articles if the elastomers are added in sufficient amounts.

Conventional methods of improving chemical resistance include the use of polyolefin resins such as polyethylene and polypropylene, long-chain aliphatic esters and their metal salts, liquid paraffin, wax, and the like, but these substances usually have poor compatibility and can be expected to cause bleed out and sheet-like peeling when the composition is molded, rendering such improvcment methods less than desirable.

The object of the present invention is to provide a resin composition that, as described hereinabove, does not peel in sheets, has good chemical resistance and impact resistance, and is especially well suited for use in automotive parts.

### Summary of the Invention

The problem addressed by the invention is solved by a thermoplastic resin composition for automotive parts comprising (A) 20-80% poly(phenylene ether) resin and (B) a specific styrenic resin.

### Detailed Description of the Invention

The present invention is described in detail hereinbelow. A conventional poly(phenylene ether) resin is used in the invention, for example, the polymer described by the following formula. 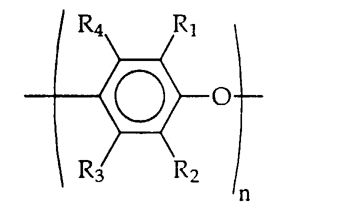 wherein R₁, R₂, R₃, and R₄ denote monovalent substituents selected from among hydrogen, halogen, alkyl groups, alkoxy groups, and haloalkyl groups and haloalkoxy groups in which the halogen atom and phenyl ring are separated by at least two carbon atoms and a tertiary carbon atom is not present, and n is an integer indicating the degree of polymerization. Polymers described by this general formula may be used singly or in combinations of two or more. In preferred specific examples, R₁ and R₂ are alkyl groups with one to four carbon atoms, and R₃ and R₄ are hydrogen or alkyl groups with one to four carbon atoms. Examples include poly(2,6-dimethyl-1,4-phenylene) ether, poly(2,6-diethyl-1,4-phenylene) ether, poly(2-methyl-6-ethyl-1,4-phenylene) ether, poly(2,6-dipropyl-1,4-phenylene) ether, and poly(2-ethyl-6-propyl-1,4-phenylene) ether.

The poly(phenylene ether) resin poly(2,6-dimethyl-1,4-phenylene) ether is especially preferred. An example of a poly(phenylene ether) copolymer is a copolymer containing alkyl-3-substituted phenol, for example, 2,3,6-trimethylphenol, in some of its phenylene ether repeating units, examples of which are cited hereinabove. Copolymers in which styrenic compounds are grafted onto these poly(phenylene ether)s may also be used. Such graft compounds can be obtained by grafting, for example, styrene, α-methylstyrene, vinyltoluene, or chlorosytrene onto the above-cited poly(phenylene ether)s.

The styrenic resin used in the present invention must contain at least 25 percent by weight of a repeating structural unit derived from a vinyl aromatic compound described by 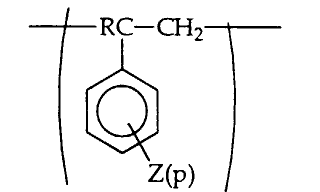 wherein R is hydrogen or an alkyl group with one to four carbon atoms, Z is halogen or a substituent with one to four carbon atoms, and p is an integer ranging from 0 to 5. Such polystyrenic resins may be, for example, styrenic polymers in which styrene is modified by interaction with styrene, a derivative thereof, or a natural or synthetic elastomeric substance such as polybutadiene, polyisoprene, butyl rubber, EPDM rubber, ethylenepropylene copolymer, natural rubber, polysulfide rubber, polyurethane rubber, or epichlorohydrin, or a styrene-containing copolymer such as styrene-acrylonitrile copolymers, styrene-butadiene copolymers, styrene-maleic anhydride copolymers, styrene-acrylonitrile-butadiene terpolymers, poly(α-methyl styrene), or copolymers of ethylvinylbenzene and divinylbenzene. Another resin preferred for this invention is rubber-modified polystyrene with 12-20 percent by weight grafts of polybutadiene rubber or EPDM rubber.

At this point, the content of the rubber component in the rubber-modified styrenic resin should be addressed. Although the practical conventional range for the rubber component has been 4-12 percent, rubber-modified styrenic resin with the considerably higher rubber content of 12-20 percent is used in the present invention. The present inventors were able to solve the various problems of the prior art automotive parts this high-rubber-content, rubber-modified styrenic resin.

The first problem that was solved is substantially improving chemical resistance. Chemical resistance is 5-10 times greater than in conventional rubber-modified styrenic resins with a rubber content of 4-12 percent. Surprisingly, chemical resistance is substantially improved over resins to which conventional rubber copolymers are added in addition to conventional rubber-modified styrenic copolymers.

That is to say that chemical resistance can be substantially altered by the selection of specific rubber-modified styrenic resins, even if the rubber content in the composition as a whole is the same. (Here, "composition" refers to the blend comprising poly(phenylene ether), rubber-modified styrenic resin, and other rubber copolymers as desired). The use of rubber-modified styrenic resin with a rubber content of 12-20 percent is therefore an essential condition for obtaining a high degree of chemical resistance.

The second problem that was solved is improving moldability. The conventional approach has been to supplement impact resistance, when it was insufficient, by adding conventional rubber-modified copolymer in addition to rubber-modified styrenic resin, but the additives were not always sufficiently compatible [with the poly(phenylene ether) composition] and led to problems such as sheet-like peeling of the molded resin. The use of high-rubber-content, rubber-modified styrenic resin, as in the present invention, makes it unnecessary to add other rubber copolymers later, thereby solving problems of compatibility and eliminating trouble during molding. Their use also makes it possible to obtain extremely useful resin compositions which maintain excellent impact resistance.

The mixing ratio of styrenic resin to poly(phenylene ether) resin should preferably be in the range in which the excellent properties of the poly(phenylene ether) resin are not lost. Therefore preferably 20-80 percent by weight of poly(phenylene ether) resin and 80-20 percent by weight of styrenic resin are used.

Because of the environment in which they are used, it is desirable for automotive parts to be made of a molding material with chemical resistance, impact resistance, and good moldability. The resin composition for automotive parts of the invention satisfies these requirements. Automotive parts made of this resin composition satisfy these requirements outstandingly and provide high-quality molded parts.

There are no particular restrictions on the type of automotive parts made with the composition of the invention, but examples include interior parts such as instrument panels, center panels, dashboards, dashboard components, and door trim; exterior parts such as bumpers and wheel covers; electrical and electronic parts; heat-resistant structural parts for the engine compartment; housings; and the like.

When the resin composition of the invention is used for automotive parts, it may contain various rubber additives as desired, provided that the properties of the composition are not compromised. There are no particular restrictions on the rubber component used, but styrenic elastomers or modified olefinic elastomers are preferred from the standpoint of compatibility. The amounts in which the elastomeric component is used must be determined carefully. As described hereinabove, it is undesirable to add excessive amounts of the rubber component since the rubber will not necessarily be sufficiently compatible with the resin composition of the invention. A suitable amount of rubber component to add is less than 10 percent by weight.

The styrenic elastomers, which are known in the art, are block copolymers with a diene rubber center block such as polybutadiene and a polyvinyl aromatic hydrocarbon end block such as polystyrene, or they may be vinyl aromatic hydrocarbon polymers consisting of a styrenic elastomer end block which is a hydrogenated form of the above-mentioned block copolymer, for example, styrene, α-methylstyrene, vinylstyrene, vinylxylene, ethylvinylxylene, vinylnaphthalene, and mixtures thereof. The end blocks may be like or different polymers.

The center block is, for example, an elastomeric polymer consisting of, for example, butadiene, propylene, isoprene, 1,3-pentabutadiene, 2,3-dimethylbutadiene, or a mixture thereof. The block copolymer may have any structure, for example, a linear or tele-radial structure.

The hydrogenated forms of the above-mentioned styrenic elastomers in which at least 80 percent, preferably 90 percent, of the aliphatic double bonds have been saturated may be used as the styrenic elastomer. The ratios and mean molecular weights of the components of these block copolymers may vary over a wide range, but the molecular weight of the center block should be larger than the total molecular weight of the end blocks. For example, it is preferred to form the block copolymer of end blocks having a mean molecular weight of approximately 4,000-115,000 and center blocks having a mean molecular weight of approximately 20,000450,000.

It is more preferred that the end blocks have a mean molecular weight of approximately 8,000-60,000 and the center blocks have a mean molecular weight of approximately 50,000-300,000. It is preferred that the end blocks constitute 2-33 percent by weight, more preferably 5-30 percent by weight, of the copolymer. The preferred copolymer has a butadiene center block and is formed from a copolymer in which 35-55 percent of the butadiene carbon atoms, more preferably 40-50 percent, form a vinyl side chain. Styrenic elastomers especially preferred in the invention are styrenic thermoplastic elastomers in which the end blocks are homostyrene and the center block is polybutadiene or a hydrogenated form of such elastomers.

Especially preferred are hydrogenated A-B-A-type block copolymers, hydrogenated A-B type block copolymers, non-hydrogenated A-B-A type block copolymers, and non-hydrogenated A-B type block copolymers.

There are no particular restrictions on the modified olefinic elastomer, although ethylene-unsaturated carboxylic acid ester copolymers are preferred from the standpoint of compatibility. The ethylene-unsaturated carboxylic acid ester copolymer contains an acrylate, preferably an ester of acrylic acid and an alcohol with one to four carbon atoms. Specific examples of the unsaturated carboxylic acid ester portion are acrylic acid esters such as ethyl acrylate, methyl acrylate, 2-ethylhexyl acrylate, and stearyl acrylate.

There are no particular restrictions on the weight ratio of ethylene and acrylate, although a range of 10:1 to 1:10 is preferred, with 5:1 to 1:5 being more preferred.

The unsaturated carboxylic acid ester copolymer preferred for use in the invention is ethylene-ethyl acrylate copolymer with a number average molecular weight ranging from 1,000 to 50,000. This range is preferred because if the number average molecular weight exceeds 50,000, flowability is diminished, and if it is less than 1,000, mechanical properties are compromised.

The monomer grafted to this ethylene-unsaturated dicarboxylic acid ester copolymer may be one or more compounds selected from among unsaturated dicarboxylic acids and their derivatives. Examples of unsaturated dicarboxylic acids and their derivatives include unsaturated dicarboxylic acids such as maleic acid, tetrahydrophthalic acid, itaconic acid, citroconic acid, crotonic acid, isocrotonic acid, and nadic acid, and their derivatives, for example, acid halides, amides, imides, anhydrides, and esters. Specific examples of derivatives include malonyl chloride, maleimide, maleic anhydride, citraconic anhydride, monomethyl maleate, and dimethyl maleate. Of these, anhydrides are preferred, with maleic anhydride and nadic anhydride being more preferred.

The preferred method of preparing such modified ethylene-unsaturated carboxylic acid ester copolymers is a grafting reaction performed by directly melting, or dissolving in solvent, an ethylene-α-olefin copolymer and then adding a free-radical initiator and the above-mentioned graft monomer. A vessel such as a reactor, extruder, or kneader may be used for the grafting reaction.

Examples of free-radical initiators include organic peroxides and organic peresters, for example, benzoyl peroxide, chlorobenzoyl peroxide, dicumyl peroxide, di-tert-butyl peroxide, 2,5-dimethyl-2,5-di(peroxybenzoate)hexene-3, 1,4-bis(tert-butylperoxyisopropyl)benzene, lauroyl peroxide, tert-butyl peracetate, 2,5-dimethyl-2,5-di(tert-butyl peroxy)hexene-3, 2,5-dimethyl-2,5-di(tert-butyl peroxy)hexane, tert-butyl perbenzoate, tert-butyl perphenyl acetate, tert-butyl perisobutyrate, tert-butyl per-sec-octoate, tert-butyl perpivalate, cumyl perpivalate, and tert-butyl perdiethyl acetate, as well as azo compounds, for example, azobisisobutyronitrile, and dimethyl azoisobutyrate. Among them, dialkyl peroxides such as dicumyl peroxide, di-tert-butyl peroxide, 2,5-dimethyl-2,5-di(tert-butyl peroxy)hexane-3, 2,5-dimethyl-2,5-di(tert-peroxy)hexane, and 1,4-bis(tert-butylperoxyisopropyl) are preferred.

As for the blending ratio for the ethylene-unsaturated carboxylic acid ester copolymer in the resin composition of the invention, it is preferred to add 0.5-10 parts by weight per 100 parts by weight of the resin composition of poly(phenylene ether) resin or polystyrene resin. If less than 0.5 percent by weight is added, chemical resistance will be insufficient, and if more than 10 parts by weight is added, it is conducive to molding problems such as peeling in sheets. There are no particular restrictions on the blending ratio for the styrenic elastomer and the ethylene-unsaturated carboxylic acid copolymer, although it is preferred to use the two together.

Adding ethylene-unsaturated carboxylic acid ester copolymer without the styrenic elastomer results in very meager improvement in impact resistance.

Reinforcing agents, for example, fibrous reinforcing agents such as glass fibers and carbon fibers and particulate and amorphous reinforcing agents such as talc, mica, wollastonite, clay, and glass beads, may be used in the resin composition of the invention.

It is preferred to blend these reinforcing agents in amounts of no more than 100 parts by weight per 100 parts of the resin composition. It is undesirable for the amount to exceed 100 parts by weight because moldability is diminished.

Other additives may be used in the resin composition of the invention, provided that the properties of the composition are not compromised. Examples include pigments, dyes, fillers, antioxidants, lubricants, parting agents, plasticizers, flame-retardants, flowability enhancers, and antistatic agents.

There are no particular restrictions on the method used to manufacture the resin composition of the invention. Conventional methods may be used, with melt-mixing being preferred. For example, a kneading extruder, Banbury mixer, roller, or kneader may be used to manufacture the composition.

### Examples

### Working Examples 1-3

The poly(phenylene ether) resin (PPE) used in the working examples was poly(2,6-dimethyl-1,4-phenylene) ether with an intrinsic viscosity of 0.46 dL/g at 30°C in chloroform. The rubber-modified styrenic resin used was high-impact polystyrene (HIPS) containing 14 percent by weight of polybutadiene in the form of a grafted elastomer in the polystyrene matrix and having a melt flow of 4.5 g/10 min at 5 kg and 200°C (HIPS-1).

The styrenic elastomers used for later addition were SEBS (tradename: KRATON G-1651, Shell Chemical Co., rubber content: 66 percent by weight) and SBS (tradename: CARYFLEX TR 1101, Shell Chemical Co., rubber content: 70 percent by weight).

After the components were dispersed and mixed in the proportions shown in Table 1, they were pelletized at 280°C with a twin-screw extruder.

**Table 1**

| Composition of the working examples. | | | |
|---|---|---|---|
| | Working Example | | |
| Component | 1 | 2 | 3 |
| PPE | 40 | 40 | 40 |
| | | | |
| HIPS - 1 | 60 | 60 | 60 |
| HIPS - 2 | | | |
| HIPS - 3 | | | |
| | | | |
| SEBS | | 6 | |
| SBS | | | 5 |
| Rubber content of composition (wt%) | 8.4 | 12 | 12 |

The resultant pellets were molded with an injection molder at a cylinder temperature of 270°C and injection pressure of 1,000 kg/cm², and their physical properties were measured. A molded sheet, 1,000 mm (long) by 100 mm (wide) by 3 mm (thick) was made to approximate an actual large-size automotive part, and the molded article was inspected for sheet-like peeling and the like.

### Comparative Examples 1-6

Poly(phenylene ether) resin identical to that used in Working Example 1, high-impact polystyrene (HIPS-2) with a polybutadiene content of 9 percent by weight and melt flow of 1.5 g/10 min at 200°C and 5 kg, high-impact polystyrene (HIPS-3) with a polybutadiene content of 8 percent by weight and melt flow of 8 g/10 min at 5 kg and 200°C, and the styrenic elastomer used in the working examples were blended in the proportions shown in Table 2. The desired compositions and molded test specimens of them were obtained by the same methods used in the working examples.

**Table 2**

| Composition of the working examples. | | | | | | |
|---|---|---|---|---|---|---|
| | Comparative Example | | | | | |
| Component | 1 | 2 | 3 | 4 | 5 | 6 |
| PPE | 40 | 40 | 40 | 40 | 40 | 40 |
| | | | | | | |
| HIPS - 1 | | | | | | |
| HIPS - 2 | 60 | | | | | |
| HIPS - 3 | | 60 | 60 | 60 | 60 | 60 |
| | | | | | | |
| SEBS | | | 5.8 | | 11 | |
| SBS | | | | 5.5 | | 10 |
| Rubber content of composition (wt%) | 5.4 | 5 | 8.4 | 8.4 | 12 | 12 |

### Chemical Resistance

One-percent of strain was applied to 1/8-inch test specimens with a forced bending strain jig, the bent specimens were immersed in an environmental chemical, and the time to breaking was measured. The environmental chemical was ST-7 made by Yushiro Kagaku Kogyo K.K.

### Peeling in Sheets

Test specimens 1,000 mm (long) by 100 mm (wide) by 3 mm (thick) were molded and cut at a 45° angle with a cutter knife near the gate end. After attempting to raise and peel the resulting wedge, the specimen was observed for peeling. The evaluation criteria used are shown below.
○: No peeling observed. No problems whatsoever.
Δ: Several layers of peeling at a 2-3 mm angle. Peeled surfaces somewhat blackened.
×: Peeled surface shiny. Already showed swelling near gate immediately after molding.

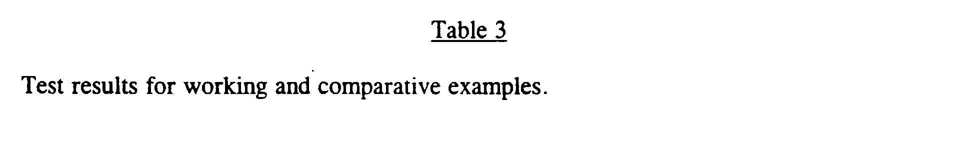

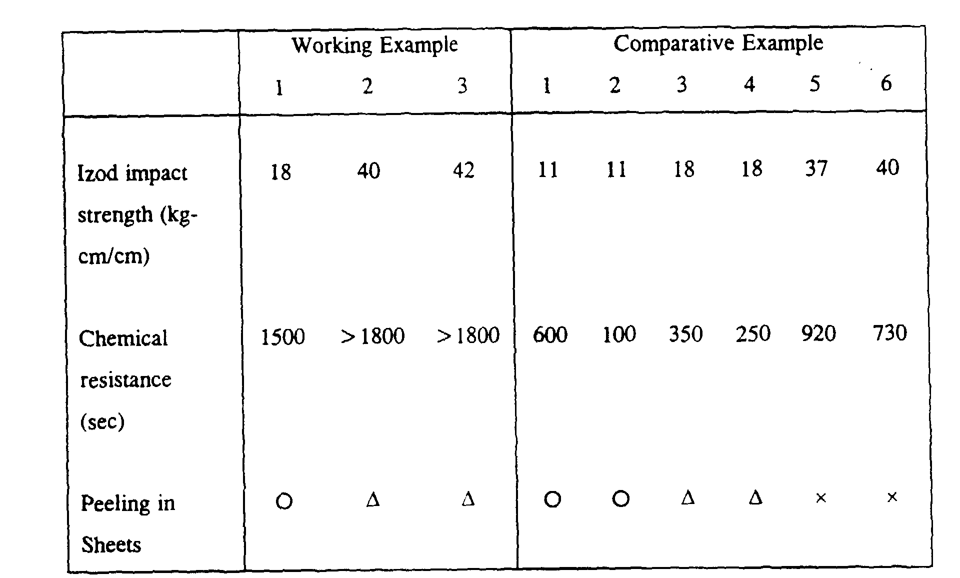

As is clear from the above description and test results, chemical resistance and resistance to sheet-like peeling can be maintained at high levels, while at the same time chemical resistance is greatly improved, by means of the thermoplastic resin composition for automotive parts of the invention. High-quality automotive parts can be obtained with easily by use of such resin compositions.

## Claims

1. A thermoplastic resin composition comprising:
(A) 20-80 percent by weight of a poly(phenylene ether) resin, and
(B) 80-20 percent by weight of a styrenic resin, wherein
i) the styrenic resin is modified with from 12 to 20 percent by weight of a rubber component, and
ii) the melt viscosity of the styrenic resin, expressed as melt flow rate measured at 200°C with a 5 kg load, ranges from 3 g/10 min to 10 g/10 min.

2. The thermoplastic resin of Claim 1, further comprising 0.5-10 parts by weight, per 100 parts by weight of the thermoplastic resin composition, of a styrenic elastomer or a modified olefinic elastomer.

3. The thermoplastic resin of Claim 2, wherein the styrenic elastomer is selected from the group consisting of hydrogenated A-B-A-type block copolymers, hydrogenated A-B type block copolymers, non-hydrogenated A-B-A type block copolymers, and non-hydrogenated A-B type block copolymers.

4. The thermoplastic resin of Claim 3 , wherein the styrenic elastomer is a block copolymer with a diene rubber center block and a polyvinyl aromatic hydrocarbon end block.

5. The thermoplastic resin of Claim 3 or Claim 4, wherein the styrenic elastomer has a hydrogenated center block.

6. The thermoplastic resin of Claim 2, wherein the modified olefinic elastomer is an ethylene-unsaturated carboxylic acid ester copolymer.

7. The thermoplastic resin of Claim 6, wherein the modified olefinic elastomer is a copolymer comprising ethyl acrylate, methyl acrylate, 2-ethylhexyl acrylate, or stearyl acrylate.

8. The thermoplastic resin of Claim 6, wherein the modified olefinic elastomer comprises a weight ratio of ethylene and to unsaturated carboxylic acid ester of 10:1 to 1:10.

9. The thermoplastic resin of Claim 6, wherein the modified olefinic elastomer further comprises an unsaturated dicarboxylic acid monomer or derivative of an unsaturated dicarboxylic acid monomer, wherein the monomer is grafted to the ethylene-unsaturated dicarboxylic acid ester copolymer.

10. A method to provide a chemically resistant composition, said method comprising melt mixing:
(A) 20-80 percent by weight of a poly(phenylene ether) resin, and
(B) 80-20 percent by weight of a styrenic resin, wherein
i) the styrenic resin is modified with from 12 to 20 percent by weight of a rubber component, and
ii) the melt viscosity of the styrenic resin, expressed as melt flow rate measured at 200°C with a 5 kg load, ranges from 3 g/10 min to 10 g/10 min.
